# DEMANDE DE BREVET EUROPEEN

(11) **EP 1 237 077 A1**
(43) Date de publication de la demande: **04.09.2002**
(21) Numéro de dépôt: 02075604.5
(22) Date de dépôt: 07.02.2002
(51) Int. Cl.: G06F 9/44

(54) **Station de programmation élaborant un programme en langage unique et équipement d'automatisme utilisant un tel programme**

(30) Priorité: 19.02.2001 FR 0102302
(71) Demandeur: Schneider Automation, 06560 Valbonne (FR)
(72) Inventeur: Nicolle, Pascal, 06500 Cagnes s/mer (FR); Tuccinardi, Christian, Rés. Golf Juan Parc, 06220 Golfe Juan (FR); Bories, Bruno, Ir., Rés. Amhosis, 06110 Le Cannet (FR)
(74) Mandataire: Carias, Alain

(57) **Abrégé**

La présente invention concerne une station de programmation pour une application d'automatisme qui est destinée à être exécutée dans un équipement d'automatisme. La station de programmation mémorise dans une mémoire interne au moins un fichier contenant une grammaire de description des applications d'automatisme en format textuel, pour au moins un des langages graphiques d'automatisme (Ladder, SFC, FBD) selon un langage unique, hiérarchisé et orienté objet. Elle contient également un ensemble d'un ou plusieurs fichiers de description, chaque fichier de description décrivant une partie de l'application d'automatisme et étant exprimé dans ce langage unique. Le langage unique, hiérarchisé et orienté objet est le langage XML (eXtended Markup Language).

## Description

La présente invention concerne une station de programmation élaborant un programme utilisant un langage unique, hiérarchisé et orienté objet pour programmer une application d'automatisme et un équipement d'automatisme utilisant un programme élaboré par une telle station de programmation.

Une station de programmation désigne ci-après un équipement informatique, notamment un ordinateur personnel de type PC, connectable à un équipement d'automatisme. Un équipement d'automatisme désigne ci-après un automate programmable, une station de contrôle/commande, une commande numérique ou tout équipement pouvant contenir et exécuter un programme d'application contrôlant une application d'automatisme. Cette application d'automatisme appartient par exemple au domaine des automatismes industriels, des automatismes du bâtiment ou du contrôle/commande des réseaux électriques de distribution.
Un tel équipement d'automatisme est composé d'une unité centrale et d'un ou plusieurs coupleurs d'entrées-sorties connectés à des capteurs et à des préactionneurs de l'application d'automatisme à commander.
L'unité centrale comprend au moins un processeur, une mémoire non volatile, en général non modifiable (type ROM), ou modifiable (type EEPROM), contenant le programme constructeur appelé encore système d'exploitation propriétaire (proprietary operating system) exprimé dans un langage spécifique au constructeur de l'équipement d'automatisme, une mémoire vive et un gestionnaire des entrées/sorties, qui communiquent entre eux par un bus dit de fond de panier. La mémoire vive ou mémoire volatile (type RAM) contient, dans une première zone, le programme utilisateur et dans une deuxième zone, les données, en particulier les images des états des coupleurs d'entrées-sorties et les constantes relatives au programme utilisateur.

Le programme utilisateur, ou appelé encore programme d'application, est chargé de faire du contrôle ou de la commande d'une application d'automatisme au moyen d'entrées/sorties pilotées par ce programme d'application. Il est élaboré par un concepteur et est écrit dans un ou plusieurs langages graphiques d'automatisme intégrant notamment des schémas à contacts (Ladder Diagram), appelés ci-après langage Ladder, des diagrammes fonctionnels en séquence (Sequential Function Chart ou langage Grafcet), appelés ci-après langage SFC, des blocs fonctions (Function Block Description), appelés ci-après langage FBD, ou bien dans des langages textuels d'automatisme de type IL (Instruction List) ou ST (Structured Text). Ces langages d'automatisme sont avantageusement conformes à la norme IEC1131-3, de façon à faciliter la programmation par un concepteur automaticien ne maîtrisant pas forcément les langages informatiques. Ces langages sont utilisables sur des stations de programmation qui sont reliées ou non à l'équipement d'automatisme à programmer.

A ce jour, les programmes d'application résultant de l'utilisation des langages graphiques d'automatisme conformes à la norme IEC1131-3 ne peuvent pas être échangés entre équipements d'automatisme de constructeurs différents ayant des programmes constructeurs reposant sur des langages constructeurs différents. En effet après que le concepteur d'un automatisme ait réalisé le programme d'application dans un des langages normalisés, la station de programmation sur lequel le concepteur travaille traduit ce programme dans le langage spécifique du constructeur de l'équipement d'automatisme sur lequel le programme d'application a été développé, car il n'existe pas de format d'échanges standardisé.

Un premier but de l'invention est d'obtenir une station de programmation utilisant un langage unique, hiérarchisé et orienté objet éditable par n'importe quel éditeur pour décrire des applications d'automatisme quel que soit le langage graphique de fonctionnement de l'équipement d'automatisme.

Ce but est atteint par le fait qu'une station de programmation d'une application d'automatisme destinée à être exécutée dans un équipement d'automatisme, mémorise dans une mémoire interne au moins un fichier de grammaire contenant une grammaire de description des applications d'automatisme en format textuel, pour au moins un des langages graphiques d'automatisme (Ladder, SFC, FBD) selon un langage unique, hiérarchisé et orienté objet. La station de programmation contient également en mémoire un ensemble d'un ou plusieurs fichiers de description, chaque fichier de description décrivant une partie de l'application d'automatisme et étant exprimé dans le langage unique, hiérarchisé et orienté objet.

Selon une caractéristique, le langage unique, hiérarchisé et orienté objet est le langage XML (eXtended Markup Language).
Selon une autre particularité, l'ensemble des fichiers de description de l'application contient un fichier de description du programme d'application, un fichier de description des entrées-sorties de l'application et un fichier de description des données de l'application.
Selon une autre particularité, un fichier de grammaire décrit une application en langage Ladder en définissant les différents éléments du langage Ladder comme des objets, chacun de ces éléments comprenant des attributs soit sous forme d'objets, de paramètres, de variables ou de textes et constituant des informations mémorisées dans la mémoire interne de la station de programmation et représentables sous forme d'arborescence. Les différents éléments du langage Ladder comprennent un contact, un lien horizontal, un lien vertical, une bobine, un court-circuit, une cellule vide, un appel de bloc fonction, une expression FFB, un bloc de comparaison, un bloc d'opérations arithmétiques.
Selon une autre particularité, un fichier de grammaire décrit une application en langage SFC en définissant comme des objets les différents éléments du langage SFC, à savoir une étape, une transition, un saut, un lien entre graphe, un commentaire, les coordonnées graphiques des différents éléments de type saut, étape ou transition étant définies par un objet de type position définissant les coordonnées de position de l'objet respectif dans la grille de lignes et de colonnes de représentation du graphique de l'objet sur des moyens de visualisation de la station de programmation.
Selon une autre particularité, un fichier grammaire décrit une application en langage FBD en définissant les différents éléments du langage FBD comme des objets. Les différents éléments du langage FBD comprennent des blocs fonctions, des boîtes de texte, des liens entre blocs, des instructions de saut, des labels et des commentaires.

Un autre but est de proposer une station de programmation permettant l'importation ou l'exportation dans le langage unique d'applications d'automatisme existantes en langage graphique d'automatisme (Ladder, SFC, FBD).
Ce but est atteint par le fait que la station de programmation incorpore, dans une mémoire non volatile, un gestionnaire XML Hndlr dialoguant par des notifications, d'une part avec un module de gestion de l'arborescence représentative de l'application d'automatisme exprimée dans le langage unique, hiérarchisé et orienté objet et d'autre part avec une pluralité de gérants de bases de données, chaque gérant étant spécifique à une partie de l'application d'automatisme mémorisée dans une des bases de données.

Un dernier but de l'invention est de proposer un équipement d'automatisme utilisant un langage unique pour décrire une application d'automatisme quel que soit le langage constructeur utilisé sur l'équipement d'automatisme.
Ce but est atteint par un équipement d'automatisme capable d'exécuter une application d'automatisme et caractérisé en ce qu'il comprend des moyens de mémorisation pour mémoriser un ensemble d'un ou plusieurs fichiers de description de l'application d'automatisme exprimés dans un langage unique, hiérarchisé et orienté objet. L'équipement d'automatisme comporte également des moyens de traduction permettant de convertir les fichiers de description dans un langage binaire exécutable par l'équipement d'automatisme.
Selon une caractéristique, le langage unique, hiérarchisé et orienté objet est le langage XML (eXtended Markup Language) et le ou les fichiers de description respectent une des grammaires de traduction en langage XML d'un ou plusieurs langages graphiques d'automatisme parmi le langage Ladder, le langage SFC et le langage FBD.
Selon une autre caractéristique, l'équipement d'automatisme comporte des moyens de vérifier que, selon le langage graphique d'automatisme utilisé, la description de l'application en langage XML satisfait la grammaire de description du langage graphique d'automatisme utilisé.

La grammaire XML proposée permet de définir un format textuel d'échange pour les cinq langages graphiques ou textuels (LD, SFC, FBD, IL, ST) conformes à la norme IEC1131-3. Du fait que les fichiers sont en ASCII, ils sont éditables par des éditeurs de texte standard (Notepad, ...) sur n'importe quelle station de programmation reliée ou non à l'équipement d'automatisme.
Les données de l'application d'automatisme vont aussi être décrites en langage XML et pourront ainsi être facilement importées ou exportées vers différents logiciels tiers (CAO électrique, Supervision, ...).
Les fichiers en langage XML pourront par ailleurs être transformés vers d'autres fichiers en langage XML ayant une grammaire différente, grâce au mécanisme des feuilles de style (XSLT : eXtensible Stylesheet Language Transformation). Il sera par exemple très facile de faire une passerelle entre les données d'une application d'automatisme et un logiciel tableur comme EXCEL de Microsoft Corporation.
Les parties d'applications générées en langage XML pourront être visualisées par des utilitaires de recherche, visualisation, édition (browsers) de la toile WEB (Internet Explorer par exemple), ceux-ci incluant de base des afficheurs de XML. C'est un autre avantage de la solution proposée que d'offrir une grammaire formelle pour échanger des programmes et des données d'une application d'automatisme.

D'autres particularités et avantages de la présente invention apparaîtront plus clairement à la lecture de la description ci-après faite en référence aux dessins annexés dans lesquels :
- la figure 1 représente une vue schématique d'une station de programmation équipée d'un gestionnaire XML pour importer ou exporter des fichiers de description d'une application du langage unique vers un des langages graphiques,
   la figure 2 montre un exemple d'organisation en mémoire de la grammaire permettant de décrire une application d'automatisme dans le langage unique selon l'invention,
- la figure 3 représente un composant logiciel qui constitue un générateur d'index de balises pour produire des fichiers d'index,
- la figure 4 représente une vue schématique des modules constitutifs d'un gestionnaire XML Hndlr permettant l'importation et l'exportation de fichiers d'un langage vers un autre.

L'invention consiste à décrire une application d'automatisme, grâce à un langage unique, orienté objet et basé sur des objets hiérarchisés, à partir d'une grammaire de ce langage qui est propre à la traduction, dans ce langage, d'un programme d'application d'automatisme écrit dans un des langages graphiques conformes à la norme IEC1131-3. Dans le mode de réalisation présenté, ce langage unique, hiérarchisé et orienté objet est par exemple le langage XML (eXtended Markup Language). La description est uniquement textuelle (aucune information binaire), elle est indépendante de l'implémentation et doit respecter les standards XML. La description XML d'une application pourra être stockée en tout ou partie sous forme d'un ensemble d'un ou plusieurs fichiers de description. Ces fichiers pourront être importés et/ou exportés vers des logiciels tiers. On attribue à chaque objet descriptif de l'application en langage XML, d'une part des balises (Tags) XML qui sont des mots encadrés par des signes "inférieur" (<) et "supérieur" (>) et d'autre part des attributs (de la forme *nom="valeur"*). L'application entière peut donc être décrite à l'aide des balises et des attributs. Les balises sont utilisées seulement pour délimiter les éléments de données et laissent l'entière interprétation des données à l'application qui les lit. Ces balises sont généralement constituées par des mots compréhensibles même pour un utilisateur non expert dans le domaine.
Habituellement, une application d'automatisme est décrite par plusieurs fichiers de description comportant un fichier de description du programme d'application, un fichier de description des entrées-sorties de l'application et un fichier de description des données de l'application.

Une grammaire spécifique à la traduction en langage XML d'une description d'un programme d'application en langage graphique Ladder est définie en annexe 1.
La description en langage Ladder est structurée en réseaux de contacts : chaque réseau est décrit ligne par ligne du haut vers le bas. Chaque ligne est décrite de la gauche vers la droite. Chaque ligne commence au rail gauche (à gauche de la représentation du réseau Ladder) et se termine sur le dernier élément graphique décrit. Chaque ligne contient une liste d'éléments graphiques standards du langage Ladder (langage à relais) : contacts, bobines, lien horizontal, lien vertical, bloc fonction .... Les coordonnées graphiques sont relatives à la position des objets dans la grille de lignes et de colonnes de représentation d'un graphique.
La ligne 10 de la grammaire représentée à l'annexe 1, correspondant à une représentation graphique d'une application en langage Ladder, définit qu'une application "LDSource" en Ladder est constituée d'un réseau Ladder (networkLD) et de zéro à n (indiqué par le signe *) boîtes de texte (textBox) définies aux lignes 59 à 61. Un réseau Ladder (networkLD) est constitué d'une ou plusieurs (indiqué par le signe +) lignes type (typeLine) et d'un lien avec zéro à n blocs fonction (FBLink). Le lien avec au moins un bloc fonction (FBLink) est constitué comme indiqué ligne 50 de l'annexe 1 de deux objets de position (objPosition) définissant par leurs coordonnées une position de départ correspondant à l'attribut "depuis" (from, ligne 51) et une position d'arrivée correspondant à l'attribut "vers" (to, ligne 52). L'objet ligne type (typeLine) est constitué, comme indiqué à la ligne 13 de l'annexe 1, de zéro à n d'une combinaison des objets suivants : soit d'une ligne vide (emptyLine), soit au choix d'un contact (contact), d'un lien horizontal (Hlink), d'un lien vertical (Vlink), d'une bobine (coil), d'un contrôle (control), d'un court-circuit (shortCircuit), d'une cellule vide (emptyCell), d'un appel de bloc fonction (calls), d'une expression FFB (FFBExpression), d'un bloc de comparaison (compareBlock) et d'un bloc d'opération arithmétique (operateBlock).
L'objet ligne type (typeLine) a un attribut label qui est du texte. L'objet contact qui est défini à la ligne 18, a pour attribut le type de contact qui définit le type contact, ouvert, fermé, montant, descendant sous forme d'énumération (openContact, closedContact, Pcontact, Ncontact) et le nom de la variable de contact (ContactVariableName) qui est du type texte. La ligne 23 définit l'objet lien horizontal (HLink) qui a pour attribut un nombre des cellules (numberCell) traversées par le lien horizontal (HLink). Les lignes 26 et 27 de l'annexe 1 définissent l'objet bobine (coil) qui peut être de type bobine (Coil), bobine inverse (notCoil), bobine de mise à un (setCoil), bobine de mise à zéro (resetCoil), bobine de franchissement de transition (hashCoil) utilisée uniquement en association avec le langage SFC, bobine à front montant (Pcoil), bobine à front descendant (Ncoil) ainsi que le nom de la variable bobine (coilVariableName) qui est du type texte. L'objet contrôle (control) définit, lignes 35 à 37, le type de commande à saut (jumpCoil) ou à retour (retCoil). L'objet court-circuit (shortCircuit) est défini ligne 38 comme la combinaison des objets lien vertical (Vlink) et au choix un des éléments suivants: lien horizontal (Hlink), contact, bobine (coil), appels (calls), bloc de comparaison (compareBlock). Un bloc appel (calls), comme défini ligne 39, contient une instance d'un objet (instanceObj), un type de paramètre (typeParam) et une description d'appel (descriptionCall). Le type de paramètre (typeParam) et la description d'un appel (descriptionCall) peuvent être, comme indiqué par le signe "?", de valeurs différentes. La valeur de type de paramètre est définie ligne 41 comme étant la valeur booléenne "0" ou "1" (enEn0). La ligne 43 définit la description d'un appel (descriptionCall) comme étant constituée d'une liste d'entrées (inputListFBD) de bloc fonction (FBD) qui sont des listes de paramètres formels et de paramètres effectifs (voir lignes 45 et 46) et d'une liste de sorties (outputListFBD) de bloc fonction (FBD). Les boites de texte sont définies par la position de l'objet boite de texte et par ses dimensions en hauteur et en largeur.
Pour des sections écrites en langage Ladder, chaque programme d'application pourra être décrit en utilisant la grammaire correspondante au langage graphique Ladder. Chaque grammaire permet de définir une hiérarchie entre objets et de représenter une application sous forme d'une arborescence graphique (30) dans la mémoire vive de la station de programmation.
Ainsi, comme on peut le voir sur l'annexe 1, la racine de l'arbre est constituée par l'application source (LDSource) à laquelle sont rattachés un ou plusieurs fils qui sont le réseau (networkLD) et éventuellement une ou plusieurs boites de texte (textBox). Le réseau a un ou plusieurs fils constitués d'objets du type ligne (typeLine) et du type lien FB (FBLink). L'objet de type ligne (typeLine) a pour fils la ligne vide (emptyLine) ou un des éléments suivants : contact (contact), lien vertical (HLink), lien horizontal (VLink), bobine (coil), commande (control), court-circuit (shortCircuit), appels (calls), comparaison de blocs (compareBlock), exécution de bloc (operateBlock), expression FFB (FFBExpression).

Une grammaire spécifique à la traduction en langage XML d'une description d'une application en langage graphique SFC est définie en annexe 2.
La ligne 11 de la grammaire représentée à l'annexe 2 définit que la description en langage SFC d'une application (SFCSource) comprend un en-tête (SFCHeader) et est structurée en pages (SFCPage) qui correspondent aux pages d'écrans affichées par l'éditeur de langage SFC. L'entête (SFCHeader) a pour attribut la tâche (task) et le nom du graphe (graphName). Chaque page peut contenir un ou plusieurs réseaux SFC (networkSFC). Chaque réseau contient une liste d'éléments "objet" choisis parmi les éléments graphiques standards suivants du langage SFC : étape (step), saut (jump), transition (transition), lien entre étapes et transition (SFCLinkObject), commentaire (commentSFC), lien entre graphes (linkSFC). Les coordonnées graphiques des différents objets de type saut, étape ou transition sont définies par un objet de type position (objPosition) définissant la position de l'objet respectif (saut, étape ou transition) dans la grille en ligne /colonne. Un objet de type étape (step) est défini par un ou plusieurs actions dont les attributs sont définis lignes 23 et 24 de l'annexe 2. Les transitions sont définies également par des conditions de transition (transitionCondition). Les objets du type liens entre graphes (linkSFC) sont constitués de deux objets de position (objPosition) définissant par leurs coordonnées une position de départ correspondant à l'attribut "depuis un type d'objet" (typeObjectFrom) et une position d'arrivée correspondant à l'attribut "vers un type d'objet" (typeObjectTo). Chacun de ces deux attributs est choisi parmi un des objets suivants : étape initiale (initialStep), étape (step) macro étape (macroStep), étape interne (stepin), transition (transition, branche A (Abranch), branche P (Pbranch), jointure A (Ajoint), jointure P (Pjoint) et pour l'attribut "vers" également entre les objets précédents et l'objet saut (jump).
La hiérarchie du langage SFC est la suivante. L'arborescence a pour racine l'objet source (SFCSource) qui a lui-même pour fils l'entête (SFCHeader) et la page (SFCPage). La page a pour fils le réseau (networkSFC), lequel réseau a pour fils l'étape (step), le saut (jump), la transition (transition), le lien objet SFC (SFCLinkObject), le commentaire SFC (commentSFC), le lien entre graphes SFC (linkSFC).

De manière similaire, une grammaire spécifique à la traduction en langage XML d'une description d'une application en langage graphique FBD est définie en annexe 3.
Chaque réseau en langage FBD contient une liste d'éléments graphiques standards du langage FBD : bloc fonction (FFBBlock), boîte de texte (textBoxFBD), label (labelObject), commentaire (commentObject FBD), lien entre blocs (linkFBD) et instruction de saut (jumpObject). Chaque élément est défini conformément aux lignes 12 à 39 de l'annexe 3. Les coordonnées graphiques sont relatives à la position des objets dans la grille en ligne / colonne.
La hiérarchie entre objets définie dans cette grammaire est la suivante. La racine est constituée par la source FBD (FBDSource), laquelle est constituée d'un ou plusieurs réseaux FBD (networkFBD). Chaque réseau est constitué de l'un ou plusieurs des éléments fils suivants : le bloc (FFBBlock), la boîte de texte (textBoxFBD), l'étiquette (labeLObject), le saut (jumpObject), le commentaire (commentObjectFBD), le lien (linkFBD).

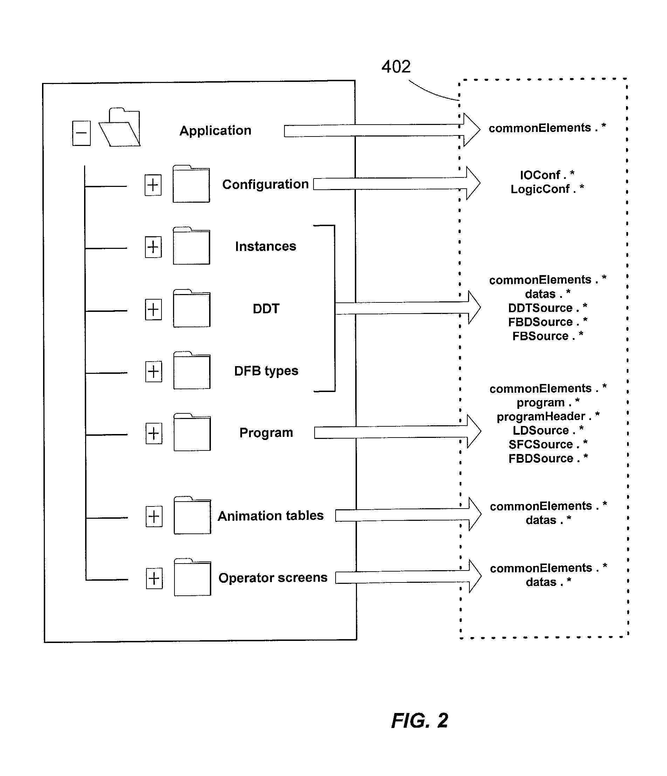

Les fichiers (402, fig.2) descriptifs de la grammaire sont en format textuel et sont organisés de la manière suivante. Une application d'automatisme peut se décomposer principalement en trois parties : son programme, ses données et ses entrées/sorties. La grammaire de chacune de ces parties est décrite, selon l'invention, dans un fichier de "Définition du Type de Document" (ou Document Type Definition) de la forme ".dtd" (par exemple : program.dtd pour le fichier programme d'application, datas.dtd pour le fichier données, IOConf.dtd pour le fichier de configuration des entrées/sorties) ou dans un fichier "Schéma" de la forme ".xsd". Par la suite, on parlera de fichiers ".dtd" mais ils pourront être remplacés de façon équivalente par des fichiers ".xsd". Ainsi, lorsque la notation de type "datas.*" est utilisée, cela signifie qu'il s'agit d'un fichier de données qui peut être de type "datas.dtd" ou "datas.xsd". Chacune des parties du programme d'application pouvant elle-même se décomposer en sous-parties faisant elles-mêmes l'objet d'un fichier descriptif en ".dtd" (ou ".xsd"). A titre d'exemple, le fichier programme (program.dtd) pourra inclure les fichiers source (LDSource.dtd, SFCSource.dtd et FBDSource.dtd, comme cela est représenté à la figure 2) qui contiennent les grammaires de différents langages graphiques d'automatisme de type schémas à contacts (Ladder), diagrammes fonctionnels en séquence (SFC) et blocs fonctions (FBD).

Les fichiers de grammaire ".dtd" ou ".xsd" (402) sont des fichiers spécifiques au constructeur de l'équipement d'automatisme. Ils contiennent la description des différentes grammaires et définissent la structure des fichiers de description XML. Ainsi le dossier "Application" (figure 2) comprend le fichier (commonElements.*) qui contient les éléments communs à l'application d'automatisme, à savoir le nom de l'application, la date de réalisation de l'application ou de la version, le numéro de version et des commentaires. Le dossier "Configuration" contient les fichiers de configuration respectivement des entrées/sorties (lOConf.*) et de la configuration logique (LogicConf.*). Les dossiers "Instance", "DDT", "DFB types" contiennent la description des données, instance, DDT, FB type sous forme des fichiers (datas, DDTSource.*, FBDSource.*, FBSource.*). Le dossier "Program" comporte les fichiers (LDSource.*, SFCSource.* et FBDSource.*) qui contiennent respectivement la description de chaque grammaire respective à chaque représentation graphique usuelle en matière d'automatisme décrites respectivement aux annexes 1 à 3 (langage Ladder, langage SFC, langage FBD). Le dossier "Animation tables" contient la description des tables d'animation qui est constituée en partie des fichiers (commonElements.* et datas.*). Le dossier "Operator screens" contient les descriptions des écrans d'exploitation constituées des fichiers des éléments communs (commonElements.*) et des données du fichier (datas.*).
Ces différents fichiers de grammaire (402) définissent la structure des fichiers XML. Un fichier XML d'une application représente une instance de la grammaire définie dans le fichier ".dtd" correspondant. Les fichiers de description XML (401) sont eux spécifiques de l'application d'automatisme considérée. Le principe de correspondance entre ces 2 types de fichiers est défini par la norme XML V1.0 conformément au modèle objet du document (DOM, Document Object Model). Le modèle objet du document DOM est un ensemble de fonctions de programmation (API : Application Programming Interface) standard pour manipuler des fichiers XML.

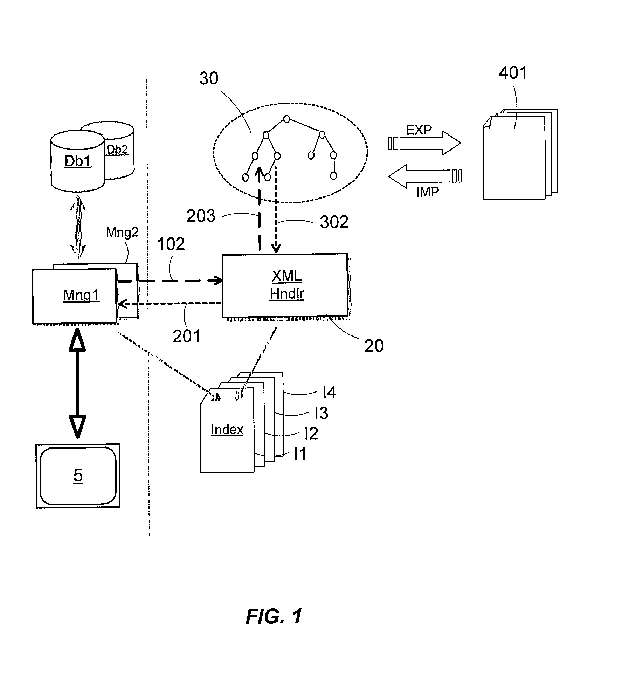

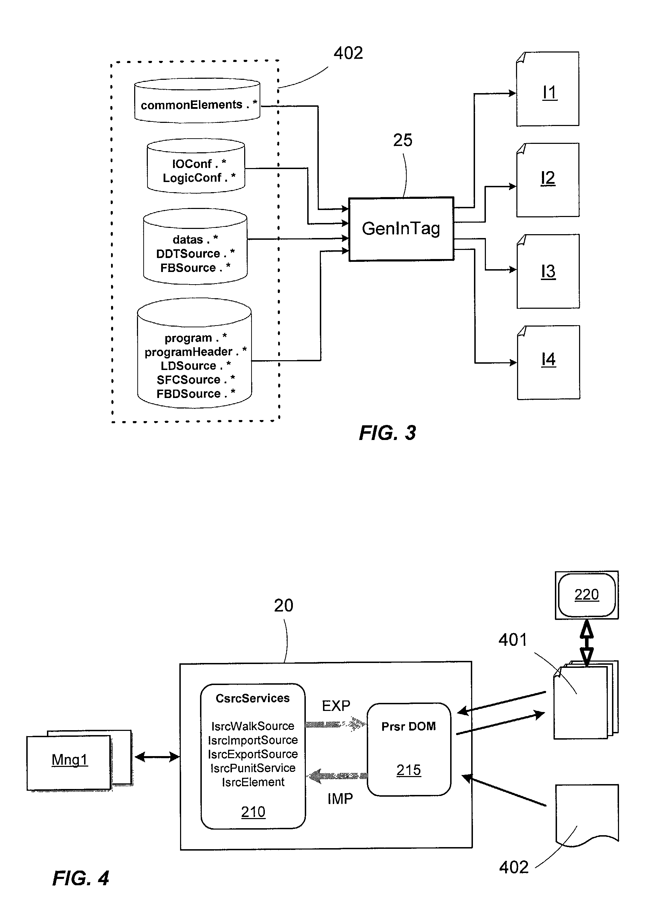

La correspondance entre les fichiers XML et les bases de données de l'application est la suivante :
Une application d'automatisme est stockée en binaire sur une station de programmation connectable à un équipement d'automatisme. Cette application d'automatisme selon l'art antérieur était mise au point par l'utilisateur qui se servait d'un éditeur (5) pour des langages graphiques IEC1131-3, utilisant un composant logiciel dénommé par la suite gérant (Mng1,Mng2,...) pour ranger les saisies utilisateurs, dans plusieurs bases de données : par exemple, une base de données (Db1) pour le programme d'application, une base de données (Db2) pour les données de l'application et une base de données (Db3) pour la configuration des entrées/sorties de l'application, (Db1) et (Db2) étant représentées sur la figure 1. La description de l'application en langage XML selon l'invention est complètement indépendante de son implémentation dans les bases de données constructeurs. Pour assurer cette indépendance, un composant logiciel particulier a été développé; il constitue un générateur automatique d'index de balises (Tag) représenté sur la figure 3 et est dénommé ci-après composant GenInTag (25).
Le composant logiciel GenInTag (25) générateur d'index de balises doit être exécuté pour produire des fichiers d'index (".h") qui permettent de faire la correspondance entre l'arborescence graphique XML (30) représentative de l'application d'automatisme dans le langage de l'invention et les structures des bases de données (Db1,Db2). Plus particulièrement, un fichier d'index permet de faire la correspondance entre les noeuds de l'arborescence produite par l'exécution des fichiers en langage XML et les objets associés aux langages graphiques de description d'automatisme qui sont stockés dans les bases de données. Ce composant GenInTag extrait les mots clés (éléments, objets et attributs) des différents fichiers de grammaire ".dtd" (402) qui définissent les grammaires XML pour le programme, les données, la configuration d'entrées-sorties en langage XML, afin de générer des index organisés selon plusieurs fichiers, par exemple quatre fichiers (I1,I2,I3,I4) dans la figure 3, contenant chacun un ou plusieurs fichiers de constantes d'index utilisés par les différents gérants (Mng1,Mng2,...) gérant une application.
Le composant GenInTag lit les fichiers de définition du type de document ".dtd" -ou de schéma ".xsd"- et génère les différents fichiers d'index. Dans le mode de réalisation présenté, il existe les fichiers d'index (I1) pour la définition des mots-clés de la configuration matérielle et logicielle (SrcTaglOConf.h, SrcTagLogicConf.h), les fichiers d'index (I2) pour la définition des mots clés des données et des types de données regroupés dans les fichiers (SrcTagDatas.h, SrcTagDDTSource.h, SrcTagFBSource.h), les fichiers d'index (I3) pour la définition des mots clés pour le programme (SrcTagProgram.h, SrcTagProgramHeader.h, SrcTagSFCSource.h, ScrTagLDSource.h, ScrTagFBDSource.h) et les fichiers d'index (14) pour la définition des mots clés communs aux autres parties de l'application (SrcTagCommonElements.h). Ces fichiers d'index réalisent la correspondance qui permet d'utiliser les bases de données (Db1, Db2,...) de description des applications selon l'art antérieur. Ils sont stockés dans une mémoire non volatile de la station de programmation.

La station de programmation incorpore dans une mémoire non volatile un programme gestionnaire XML Hndlr (20) -en anglais XML Handler-. Le gestionnaire XML Hndlr (20) est un composant logiciel développé en langage C++, utilisable au travers d'une interface COM. Il encapsule et utilise les services d'un analyseur Prsr DOM (215) -en anglais Parser DOM- et offre des services de haut niveau pour la gestion de l'arborescence graphique XML (30). Le gestionnaire XMLHndlr (20), représenté plus en détail sur la figure 4, permet de fabriquer l'arborescence (30) représentative de l'application à partir des fichiers de description (401) en utilisant les fichiers de grammaire (402) ou de fabriquer cette arborescence à partir des demandes des gérants (Mng1, Mng2,...) des bases de données de l'application. Il utilise les différents gérants qui appellent les services du gestionnaire XML Hndlr (20) en utilisant les fichiers d'index (I1 à I4) générés par le composant GenInTag (25). Comme représenté à la figure1, chaque partie d'une application, par exemple programme d'application (Db1) données de l'application (Db2), est gérée par un gérant spécifique (par exemple Mng1 pour le programme d'application, Mng2 pour les données). Le gestionnaire XML Hndlr (20) comporte, en plus de l'analyseur Prsr DOM qui est un composant logiciel en langage C++, une routine d'exportation (EXP) et une routine d'importation (IMP).

La routine d'exportation (EXP) écrit, dans un (ou plusieurs) fichier(s) de description XML, les données de l'application d'automatisme et la routine d'importation lit dans un (ou plusieurs) fichier(s) de description XML les données de l'application d'automatisme. Ces routines font appel à la fois au service d'un module (210) de service (CsrcServices) qui lui-même se décompose en plusieurs services. Un service (IscrWalkSource) permet le déplacement dans le fichier (401) chargé en mémoire. Le module de service (CsrcServices) comprend également un service (IsrcImportSource) qui est un service d'initialisation de lecture d'un fichier de description (401), le service (IsrcexportSource) qui est un service d'écriture de fichiers et le composant (IsrcPUnitService) qui permet de gérer les services spécifiques à la station de programmation. Enfin, le gestionnaire XML Hndlr (20) comporte un service (IsrcElement) qui est un service permettant l'accès au contenu d'une donnée XML (éléments et attributs). Chacun des gérants (Mng1, Mng2,...) dialogue avec les différents services du gestionnaire XML Hndir (20). Ils utilisent les fichiers index (11 à 14) générés par le composant GenInTag (25) correspondant aux données de la base de données.
L'application mémorisée sur la station de programmation dans un ensemble d'un ou plusieurs fichiers de description XML (401) est modélisée par le gestionnaire XML Hndir (20) sous forme d'arborescence (30) en utilisant d'une part les informations réparties dans la mémoire de la station de programmation dans des bases de données (Db1, Db2,...) et sous forme de fichiers binaires, et d'autre part les index (I1 à I4) créés par le composant GenlnTag (25) pour accéder à ces informations et les représenter sous forme arborescente. Le composant gestionnaire XML Hndlr (20), comme représenté à la figure 1, communique par des notifications avec les gérants (Mng1, Mng2,...) des bases de données (Db1, Db2,...) et avec le module de gestion de l'arborescence de l'application.
Ainsi lors de la routine d'exportation, un gérant (Mng1) peut émettre une notification (102) «CreateNode (index, value)» demandant au gestionnaire XML Hndlr (20) de créer un noeud ayant un index déterminé et une valeur déterminée. Le gestionnaire XML Hndlr (20), en utilisant les valeurs d'index et les fichiers de grammaire (402) va demander au module de gestion de l'arborescence de créer, par une notification (203) «CreateNode (tagname, value)», un noeud ayant pour nom de balise le nom défini par «tagname» et pour valeur, la valeur désignée par «value». En sens inverse, lors de la routine d'importation, un gérant (Mng1) demande au gestionnaire XML Hndlr (20) de lui envoyer les informations concernant un noeud par une notification (201) «GetNode (index, value)». Le gestionnaire XML Hndlr (20) recevant cette notification examine dans les tables de correspondance constituées par les fichiers d'index (I1 à I4), l'index et le nom de balise (Tag) correspondant. Le gestionnaire XML Hndlr (20) demande alors au module de gestion de l'arborescence de lui envoyer une notification (302) «GetNode (tagname, value)».

Le gestionnaire (20) ainsi défini, permet, par son installation sur une station de programmation et en association avec les fichiers de grammaire (402) pour le langage XML, de décrire une application d'automatisme éditable par n'importe quel éditeur (220, figure 4) car les fichiers de description XML (401) de l'application ainsi obtenus sont en ASCII et peuvent être édités et modifiés grâce tout éditeur de texte. Ceci permet d'éviter d'avoir des programmes spécifiques de visualisation des langages graphiques spécifiques aux applications d'automatisme.

L'invention concerne aussi un équipement d'automatisme capable d'exécuter une application d'automatisme en langage constructeur sous la forme d'un fichier binaire. L'équipement d'automatisme comprend des moyens de mémorisation permettant de mémoriser un ensemble d'un ou plusieurs fichiers de description d'une application d'automatisme, ces fichiers de description étant exprimés dans un langage textuel unique, hiérarchisé et orienté objet. Un tel équipement d'automatisme comporte aussi des moyens de traduction, tel qu'un module interpréteur, permettant de convertir les fichiers de description dans un ou plusieurs fichiers en langage binaire constructeur exécutable par l'équipement d'automatisme. Dans le mode de réalisation présenté, ce langage unique, hiérarchisé et orienté objet est par exemple le langage XML (eXtended Markup Language). Le module interpréteur a pour fonction de traduire les instructions, décrivant une application d'automatisme, formulées en langage XML, en instructions exécutables par le système d'exploitation propriétaire (proprietary operating system) de l'équipement d'automatisme. Il intègre notamment un analyseur XML (prsr DOM) pour analyser le langage XML ainsi que des moyens de compilation.
De cette façon, on aboutit à un équipement d'automatisme dont le langage de programmation serait accessible à n'importe quel éditeur disponible sur une machine de type PC ce qui permettrait ainsi au concepteur d'applications d'automatisme de développer des programmes d'application dont les fichiers seraient mémorisés sous forme textuelle en ASCII, ceci quel que soit le constructeur de l'équipement d'automatisme et le système d'exploitation utilisé, à condition simplement que l'équipement d'automatisme ait été pourvu du module interpréteur de langage XML en langage binaire propriétaire.
Le ou les fichiers de description respectent une des grammaires de traduction en langage XML d'un ou plusieurs langages graphiques d'automatisme parmi le langage Ladder, le langage SFC, le langage FBD. L'équipement d'automatisme comporte donc également des moyens de vérifier que, selon le langage graphique d'automatisme utilisé, la description de l'application en langage XML satisfait la grammaire de description du langage graphique d'automatisme utilisé. Pour cela, les moyens de mémorisation de l'équipement d'automatisme contiennent aussi les fichiers de grammaire (402).

L'invention présente aussi l'avantage de permettre d'exploiter les anciens programmes déjà développés en convertissant (exportation) ces programmes formulés dans des bases de données (Db1, Db2,...) en fichiers XML.
De plus, le gestionnaire XML Hndlr (20) présente également l'avantage de pouvoir importer un fichier de description d'une application développée en langage XML dans une application utilisant un des langages graphiques (LD, SFC, FBD) de description d'automatisme utilisé jusqu'à présent.

Les langages graphiques peuvent ainsi être décrits de façon normalisée en ASCII. Cette normalisation d'une grammaire permet l'échange de programmes d'automatismes entre logiciels (operating system) de constructeurs différents.
La programmation en XML est indépendante d'une technologie graphique, indépendante de Windows, d'une librairie graphique quelconque, ou encore d'un format graphique (JPEG, BMP ...).
L'invention permet l'échange de programmes d'application entre ateliers de programmation hétérogènes (constructeurs différents, systèmes d'exploitation différents,...). L'invention permet la génération de programmes d'application standards pouvant être portés sur des plates-formes différentes. L'invention permet aussi la génération automatique de programmes d'application d'automatisme par des générateurs XML.
L'échange de données sous forme de fichier XML avec des logiciels de schématique électrique de type CAO, CAD, des logiciels de supervision est également facilité par l'invention.

Les annexes 4, 5, 6 décrivent respectivement les fichiers de grammaire en syntaxe "Schema" (".xsd") pour la traduction en langage XML des langages : langage Ladder (annexe 4), langage SFC (annexe 5) et langage FBD (annexe 6). Ces fichiers pourraient être utilisés sur des stations de programmation exploitant ce langage ".xsd". L'homme de métier retrouvera dans ces annexes les mêmes objets et attributs que dans la syntaxe textuelle (".dtd" des annexes 1 à 3) mais ici exprimé dans la syntaxe schéma (".xsd"). Dans ces annexes 4 à 6, la position de l'objet par rapport au début de la ligne définit, par son retrait, la dépendance hiérarchique de l'objet.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

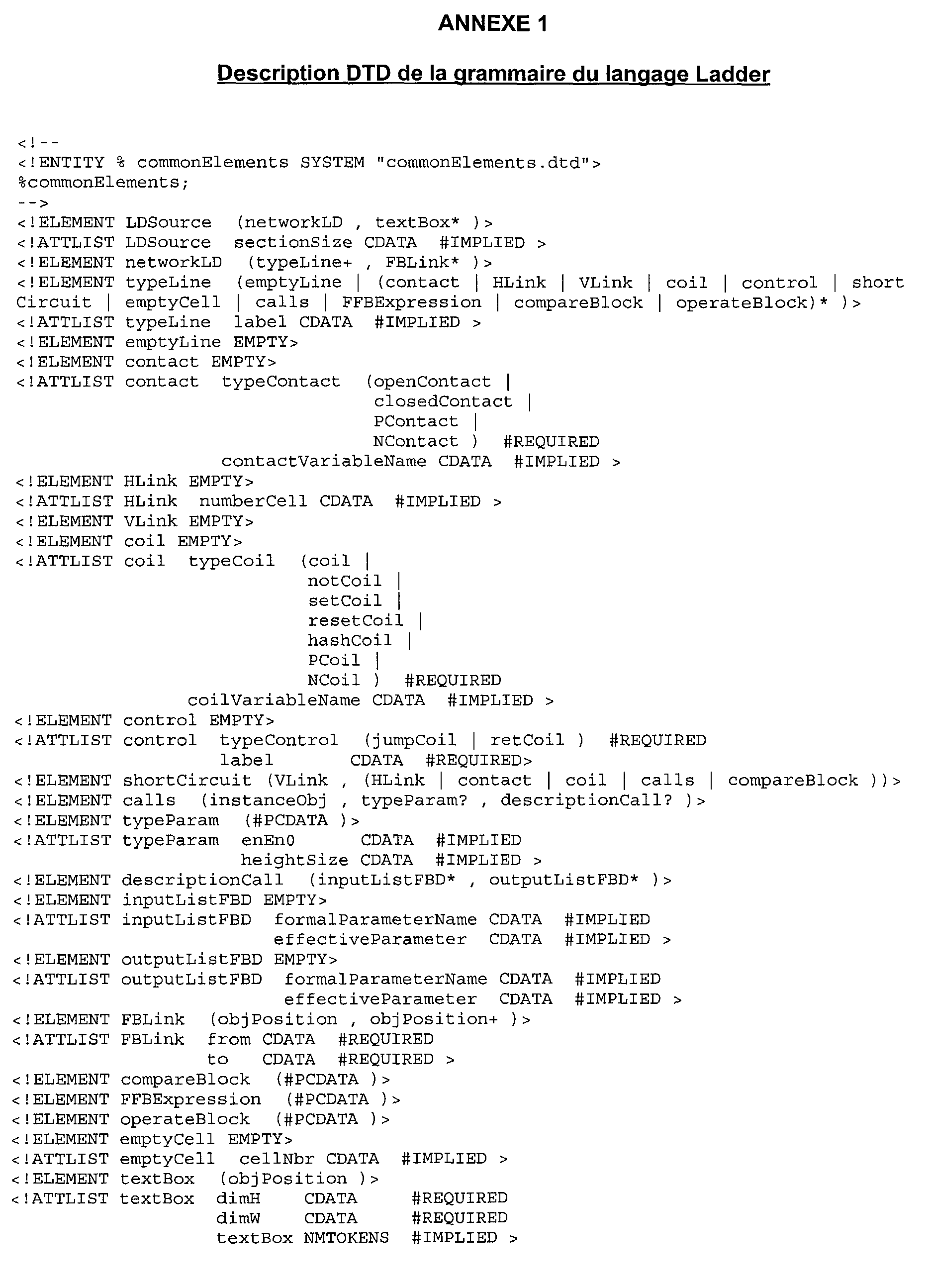

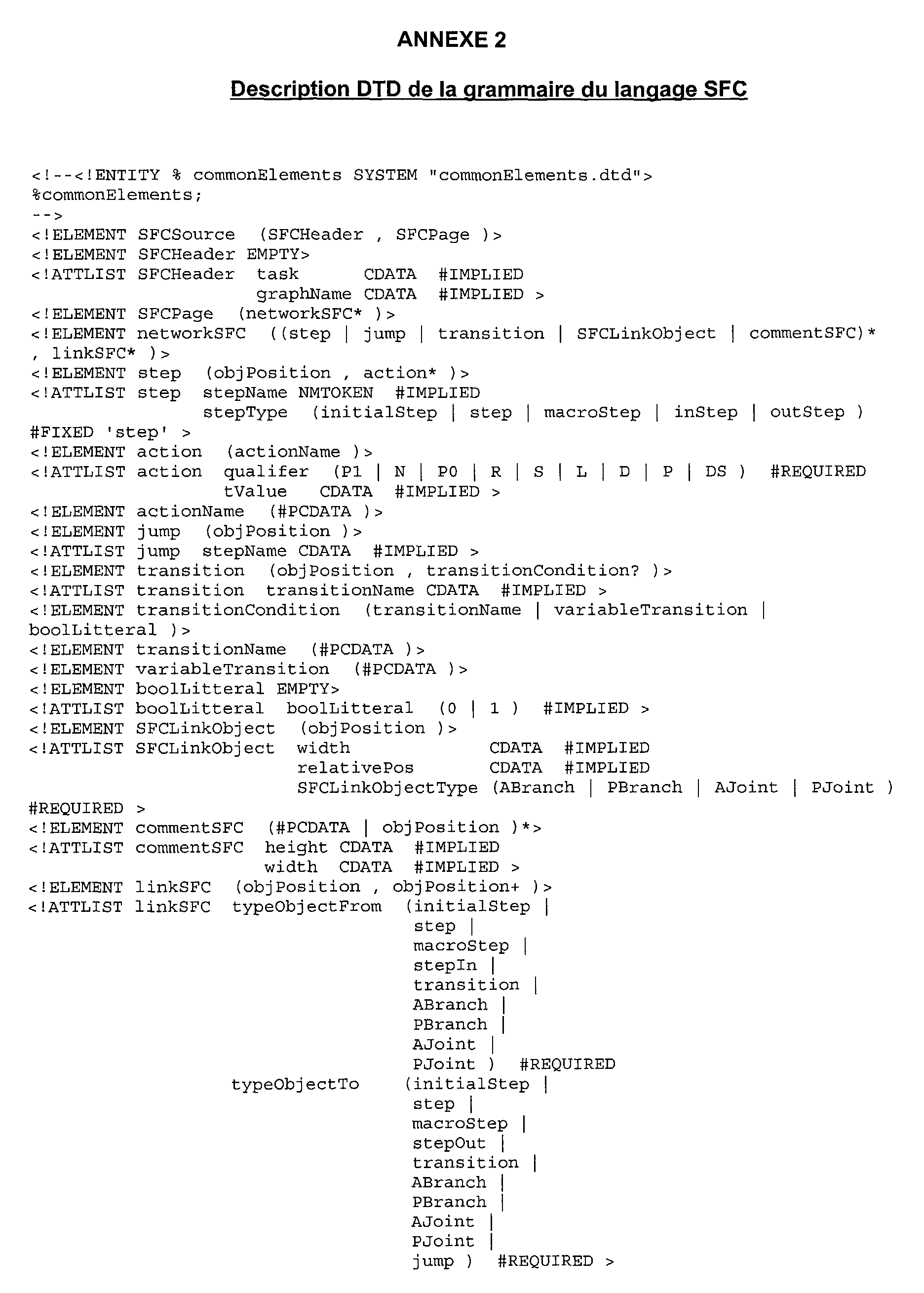

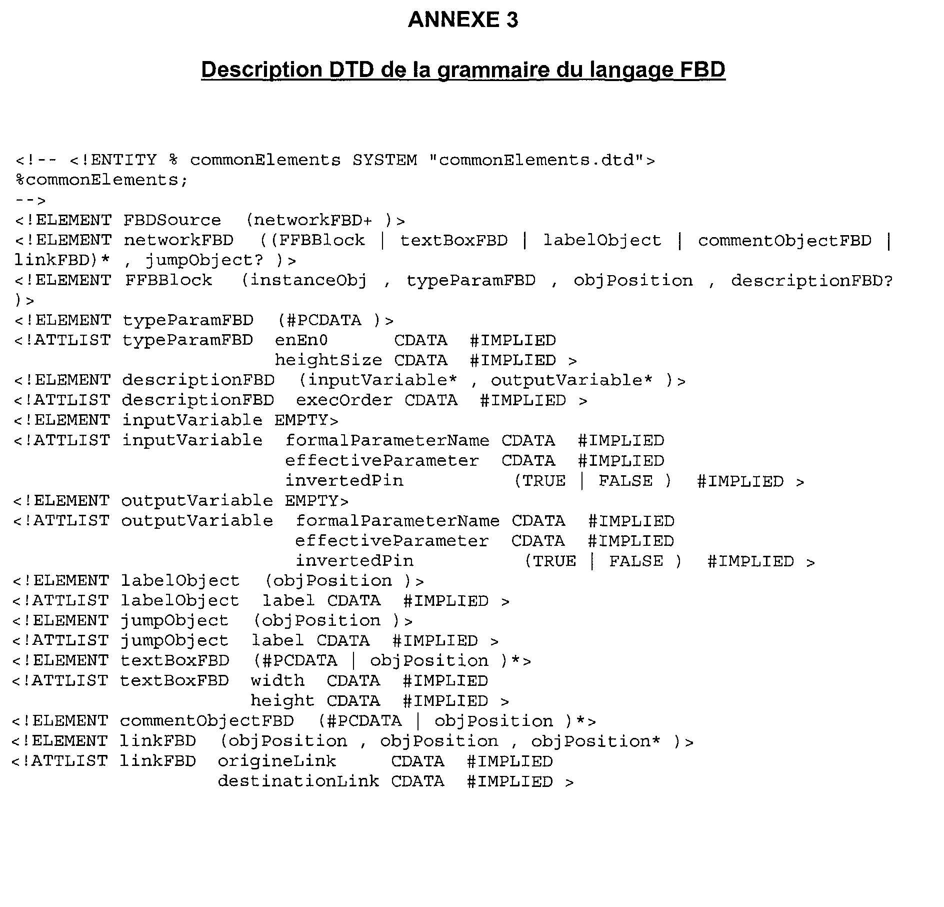

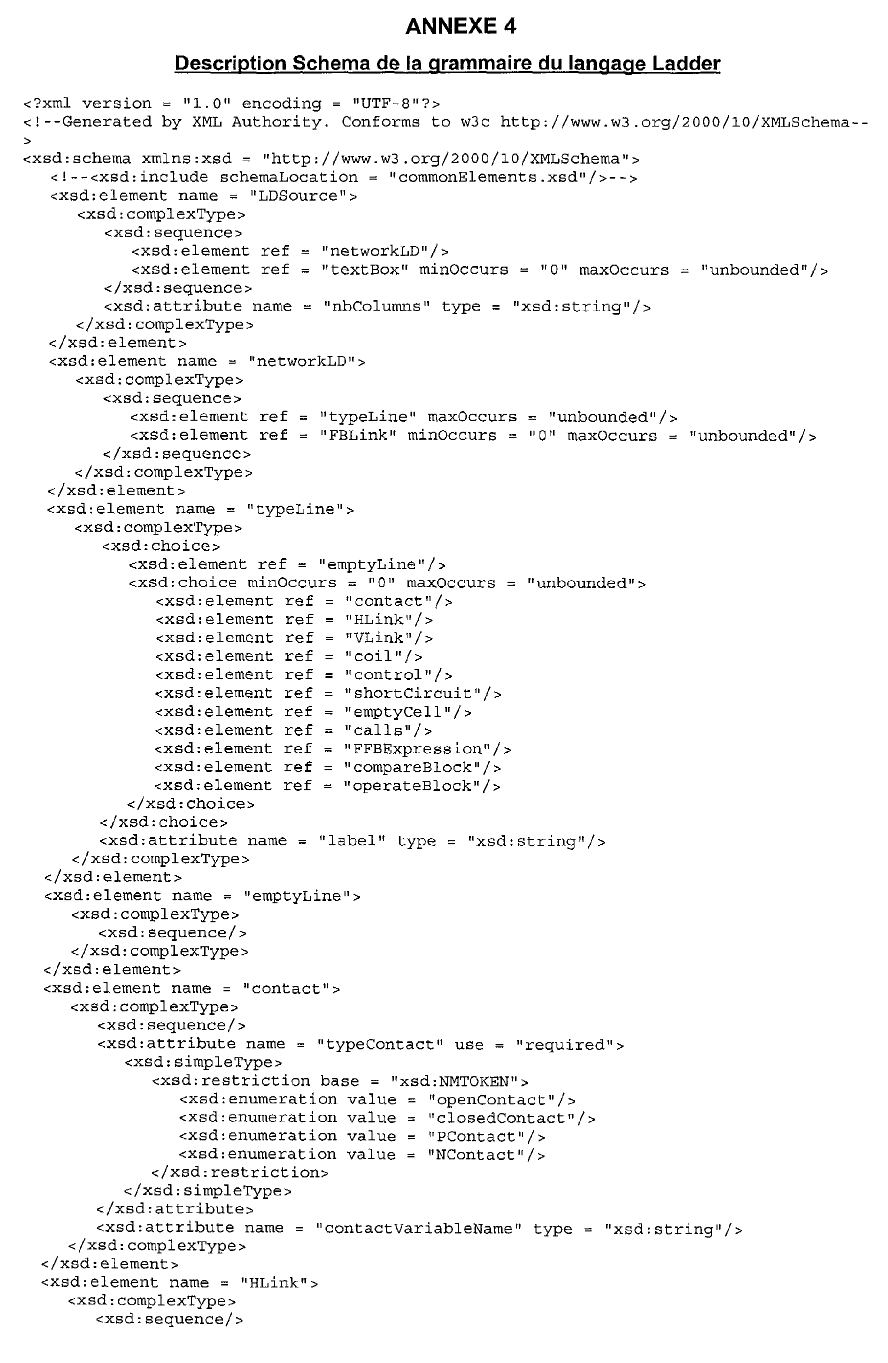

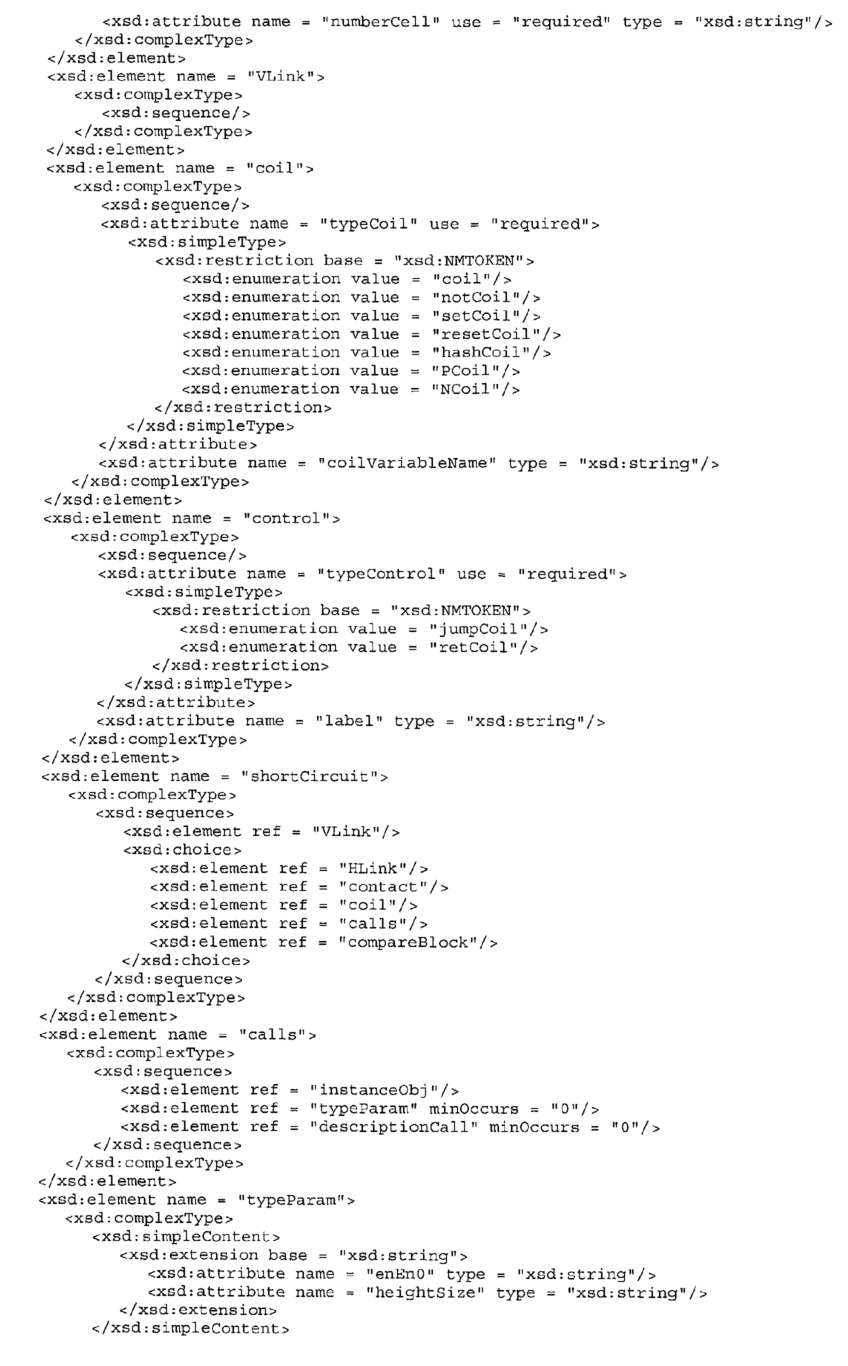

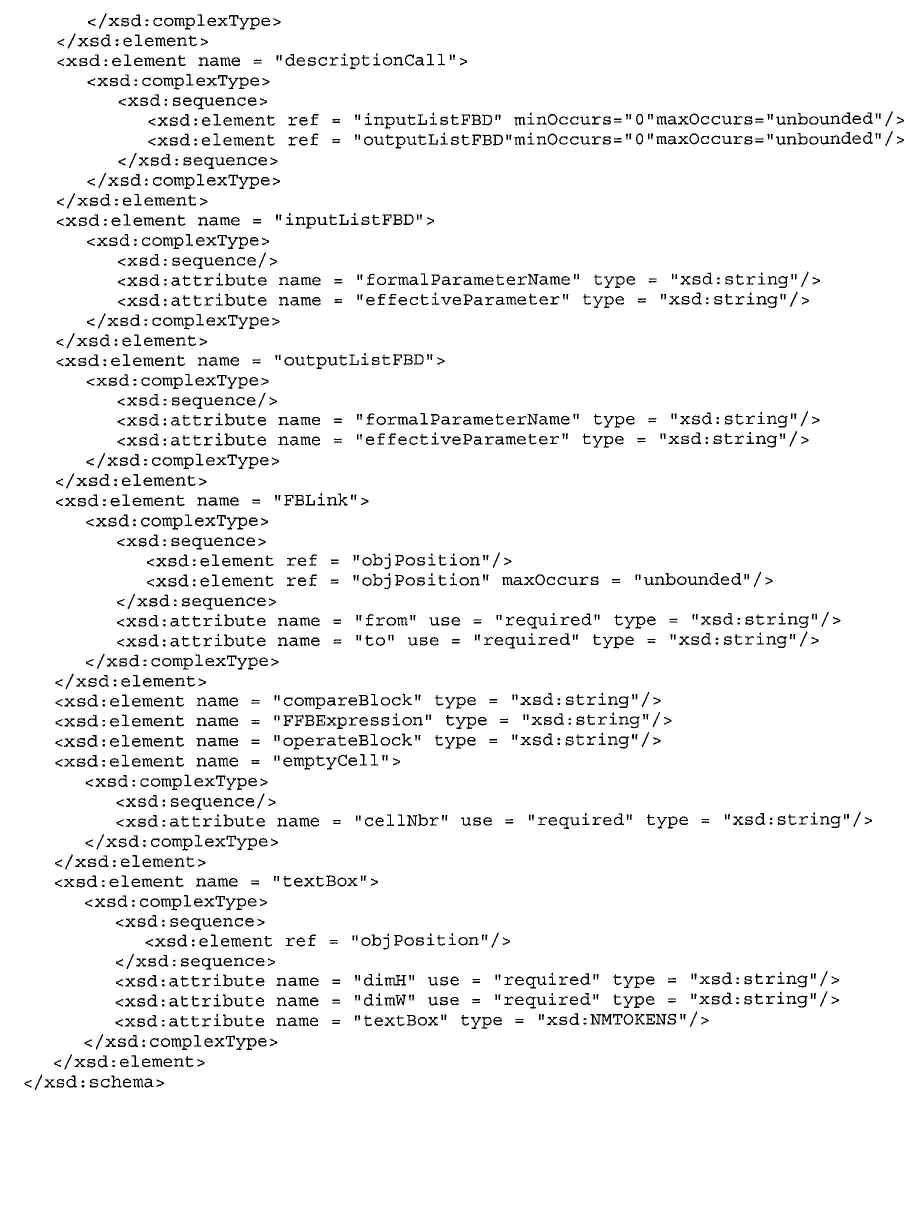

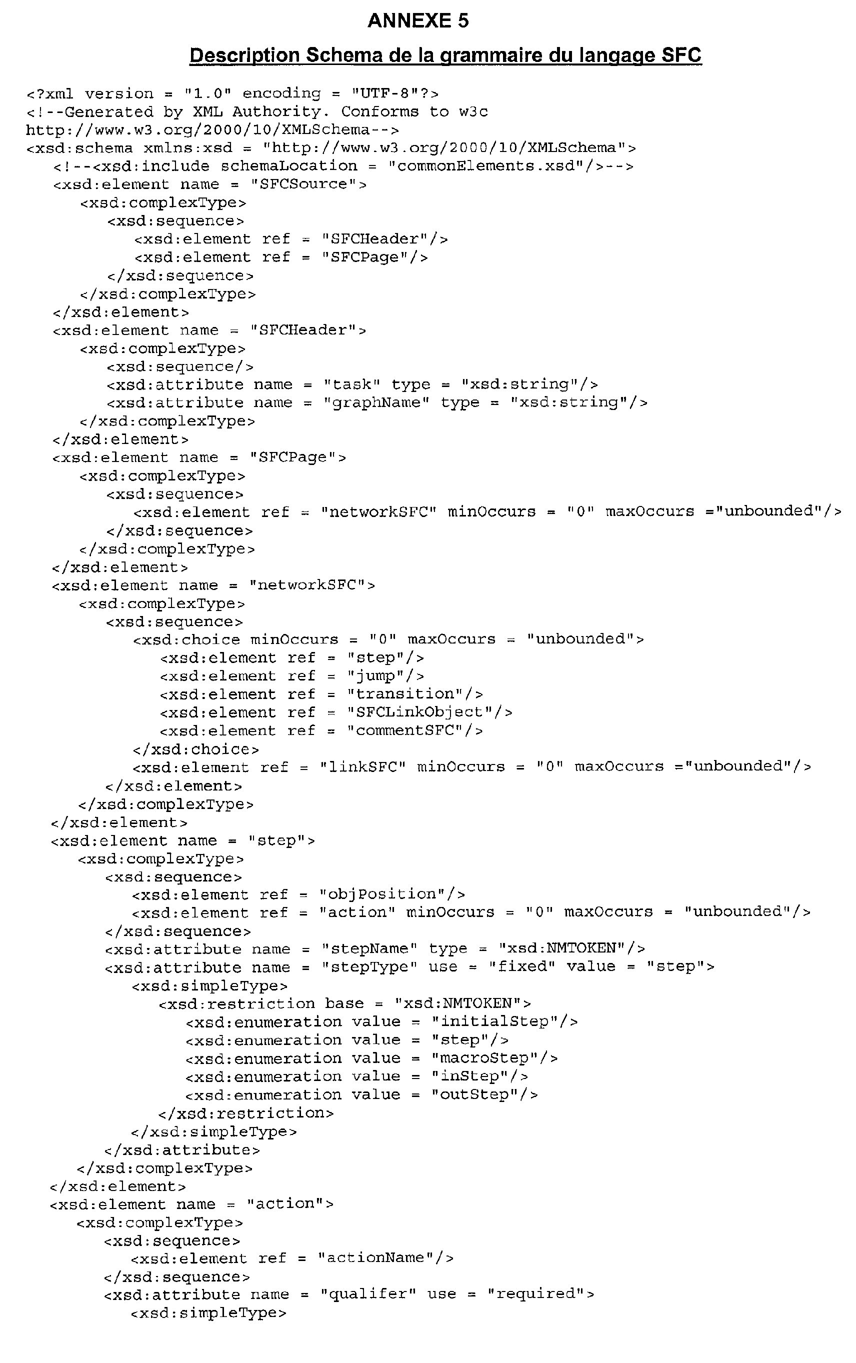

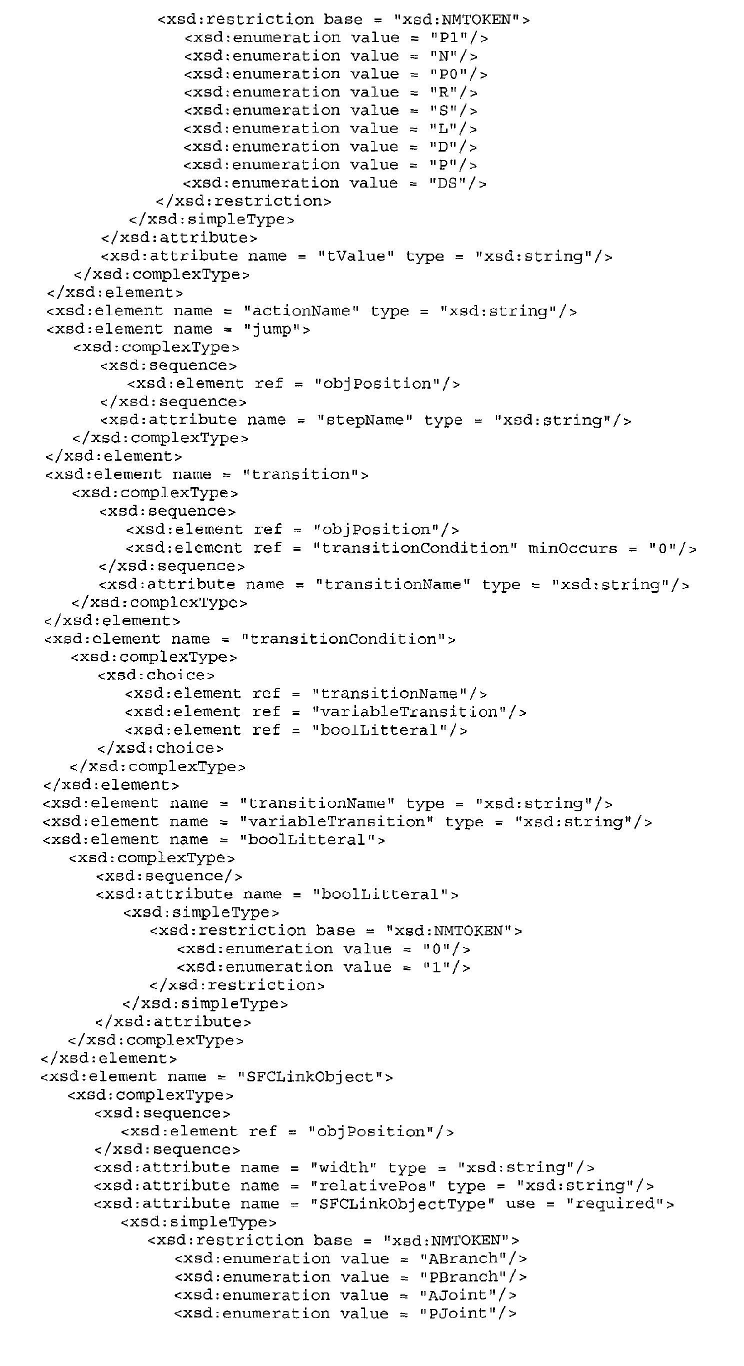

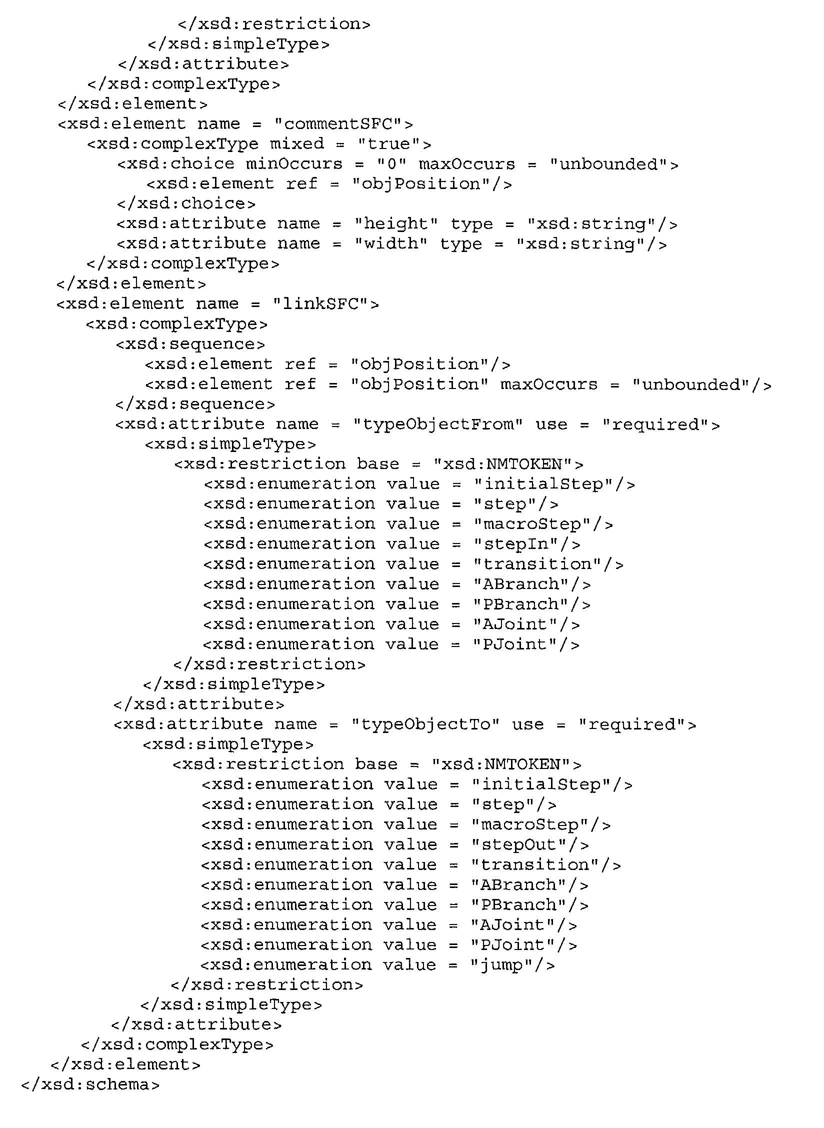

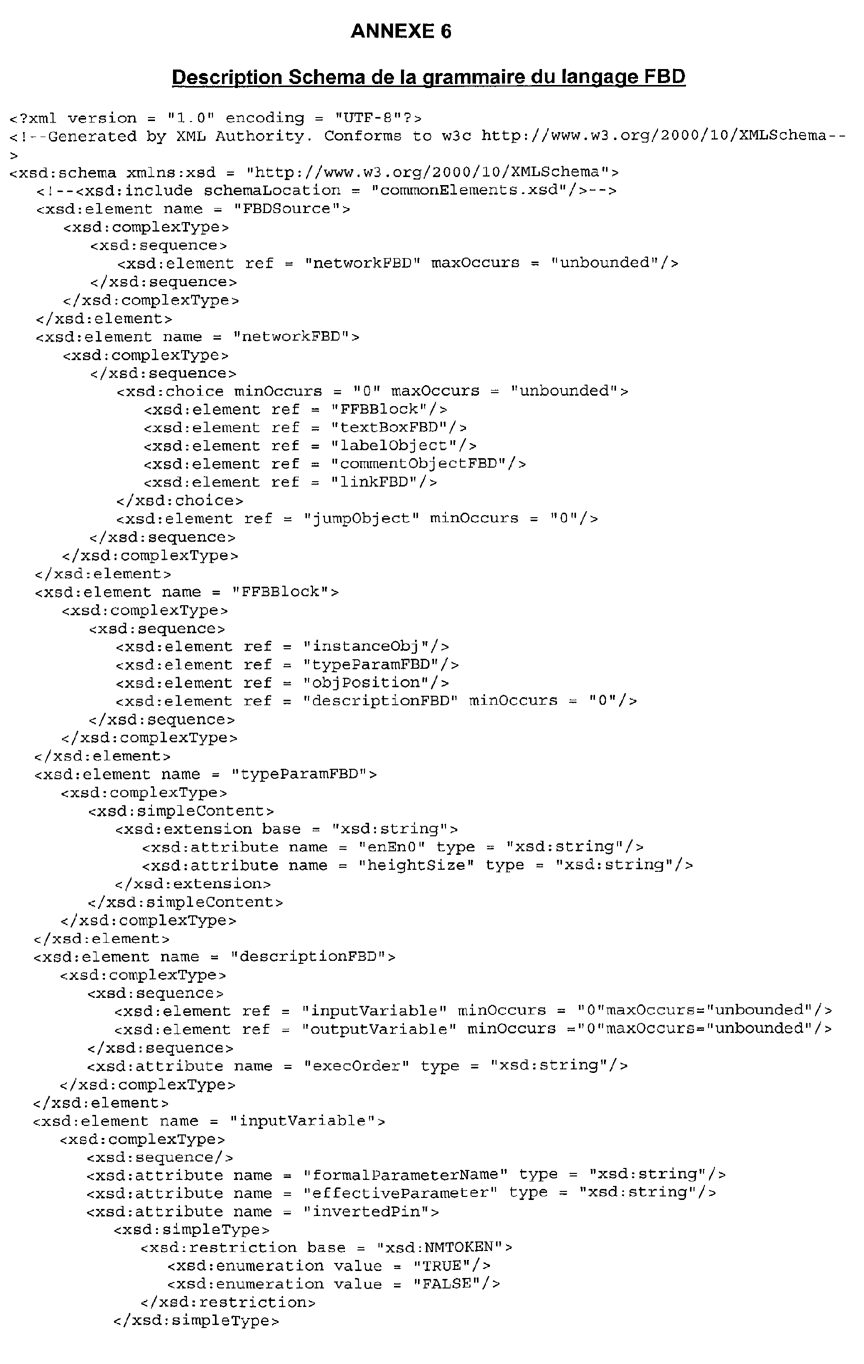

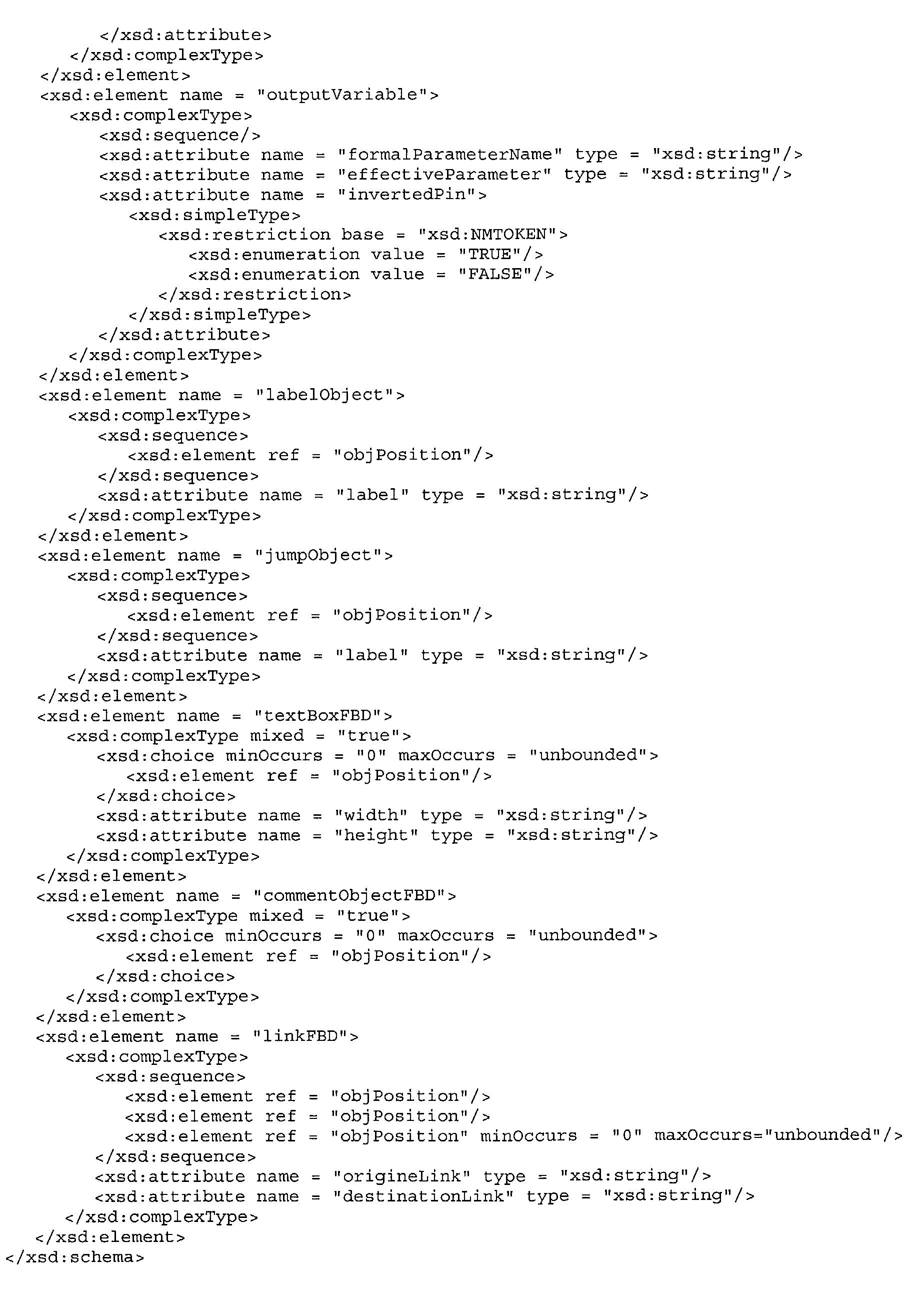

## Revendications

1. Station de programmation d'une application d'automatisme destinée à être exécutée dans un équipement d'automatisme, **caractérisée en ce qu'**elle mémorise dans une mémoire interne au moins un fichier de grammaire (402) en format textuel contenant une grammaire de description des applications d'automatisme, pour au moins un des langages graphiques d'automatisme (Ladder, SFC, FBD) selon un langage unique, hiérarchisé et orienté objet.

2. Station de programmation selon la revendication 1, **caractérisée en ce que** la mémoire contient également un ensemble d'un ou plusieurs fichiers de description (401), chaque fichier de description décrivant une partie de l'application d'automatisme et étant exprimé dans le langage unique, hiérarchisé et orienté objet.

3. Station de programmation selon la revendication 2, **caractérisée en ce que** le langage unique, hiérarchisé et orienté objet est le langage XML (eXtended Markup Language).

4. Station de programmation selon la revendication 2, **caractérisée en ce que** l'ensemble des fichiers de description (401) de l'application contient un fichier de description du programme d'application, un fichier de description des entrées-sorties de l'application et un fichier de description des données de l'application.

5. Station de programmation selon la revendication 2, **caractérisée en ce qu'**un fichier de grammaire (LD_Source.*) décrit une application en langage Ladder en définissant les différents éléments du langage Ladder comme des objets, chacun de ces éléments comprenant des attributs soit sous forme d'objets, de paramètres, de variables ou de textes et constituant des informations mémorisées dans la mémoire interne de la station de programmation et représentables sous forme d'arborescence.

6. Station de programmation selon la revendication 5, **caractérisée en ce que** les différents éléments du langage Ladder comprennent un contact, un lien horizontal, un lien vertical, une bobine, un court-circuit, une cellule vide, un appel de bloc fonction, une expression FFB, un bloc de comparaison, un bloc d'opérations arithmétiques.

7. Station de programmation selon la revendication 2, **caractérisée en ce qu'**un fichier de grammaire (SFC_Source.*) décrit une application en langage SFC en définissant comme des objets les différents éléments du langage SFC, à savoir une étape, une transition, un saut, un lien entre graphe, un commentaire, les coordonnées graphiques des différents éléments de type saut, étape ou transition étant définies par un objet de type position définissant les coordonnées de position de l'objet respectif dans la grille de lignes et de colonnes de représentation du graphique de l'objet sur des moyens de visualisation de la station de programmation.

8. Station de programmation selon la revendication 2, **caractérisée en ce qu'**un fichier grammaire (FBD Source.*) décrit une application en langage FBD en définissant les différents éléments du langage FBD comme des objets.

9. Station de programmation selon la revendication 8, **caractérisée en ce que** les différents éléments du langage FBD comprennent des blocs fonctions, des boîtes de texte, des liens entre blocs, des instructions de saut, des labels et des commentaires.

10. Station de programmation selon l'une des revendications précédentes, **caractérisée en ce qu'**elle incorpore, dans une mémoire non volatile, un gestionnaire XML Hndlr (20) dialoguant par des notifications, d'une part avec un module de gestion de l'arborescence (30) représentative de l'application d'automatisme exprimée dans le langage unique, hiérarchisé et orienté objet et d'autre part avec une pluralité de gérants (Mng1,Mng2,...) de bases de données, chaque gérant étant spécifique à une partie de l'application d'automatisme mémorisée dans une des bases de données (Db1, Db2,...).

11. Equipement d'automatisme capable d'exécuter une application d'automatisme, **caractérisé en ce qu'**il comprend des moyens de mémorisation pour mémoriser un ensemble d'un ou plusieurs fichiers de description (401) de l'application d'automatisme exprimés dans un langage unique, hiérarchisé et orienté objet, l'équipement d'automatisme comportant également des moyens de traduction permettant de convertir les fichiers de description dans un langage binaire exécutable par l'équipement d'automatisme.

12. Equipement d'automatisme selon la revendication 11, **caractérisé en ce que** le langage unique, hiérarchisé et orienté objet est le langage XML (eXtended Markup Language).

13. Equipement d'automatisme selon la revendication 12, **caractérisée en ce que** l'ensemble des fichiers de description de l'application contient un fichier de description du programme d'application, un fichier de description des entrées-sorties de l'application et un fichier de description des données de l'application.

14. Equipement d'automatisme selon la revendication 12, **caractérisé en ce que** le ou les fichiers de description respectent une des grammaires de traduction en langage XML d'un ou plusieurs langages graphiques d'automatisme.

15. Equipement d'automatisme selon la revendication 14, **caractérisé en ce que** l'équipement d'automatisme comporte des moyens de vérifier que, selon le langage graphique d'automatisme utilisé, la description de l'application en langage XML satisfait la grammaire de description du langage graphique d'automatisme utilisé.

16. Equipement d'automatisme selon la revendication 14, **caractérisé en ce que** le langage graphique d'automatisme utilisé comprend un ou plusieurs langages parmi le langage Ladder, le langage SFC et le langage FBD.
